(19) Europäisches Patentamt
European Patent Office
Office européen des brevets

(11) **EP 2 777 376 B1**

(12) **EUROPÄISCHE PATENTSCHRIFT**

(45) Veröffentlichungstag und Bekanntmachung des Hinweises auf die Patenterteilung:
**16.05.2018 Patentblatt 2018/20**

(51) Int Cl.:
***A01C 17/00*** *(2006.01)*  ***A01C 21/00*** *(2006.01)*
***E01H 10/00*** *(2006.01)*

(21) Anmeldenummer: **14000515.8**

(22) Anmeldetag: **13.02.2014**

(54) **Verfahren zur Regelung einer Einrichtung zur Veränderung des Streuringsektors eines Scheibenstreuers und zur Durchführung eines solchen Verfahrens ausgebildeter Scheibenstreuer**

Method for controlling a device for the modification of the spreader ring sector of a disc spreader and disc spreader for carrying out such a method

Procédé de régulation d'un dispositif permettant de modifier le secteur d'anneau d'épandage d'un épandeur à disque et épandeur à disque conçu pour mettre en oeuvre un tel procédé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2013 DE 102013004195**

(43) Veröffentlichungstag der Anmeldung:
**17.09.2014 Patentblatt 2014/38**

(73) Patentinhaber: **RAUCH Landmaschinenfabrik GmbH**
**76547 Sinzheim (DE)**

(72) Erfinder:
• **Stöcklin, Volker, M. Sc.**
**77975 Ringsheim (DE)**
• **Thullner, Christian, Dr.**
**73333 Gingen (DE)**
• **Minardi, Martino, M. Sc.**
**70599 Stuttgart (DE)**
• **Rauch, Norbert, Dr.**
**76547 Sinzheim (DE)**

(74) Vertreter: **Lichti - Patentanwälte Partnerschaft mbB**
**Postfach 41 07 60**
**76207 Karlsruhe (DE)**

(56) Entgegenhaltungen:
**EP-A1- 1 236 388    EP-A1- 2 055 168**
**EP-A2- 1 275 282    DE-A1- 19 723 359**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Regelung wenigstens einer Einrichtung zur Veränderung des Streuringsektors eines Scheibenstreuers, welcher wenigstens eine regelbare Dosiereinrichtung, wenigstens eine unterhalb der Dosiereinrichtung angeordnete, mit Wurfschaufeln versehene Verteilerscheibe sowie die wenigstens eine Einrichtung zur Veränderung des Streuringsektors des Streugutes auf dem Boden umfasst, wobei

(a) in einer Datenbank einer der Einrichtung zur Verstellung des Streuringsektors zugeordneten Regeleinheit funktionale Abhängigkeiten wenigstens eines Einstellparameters der Einrichtung zur Veränderung des Streuringsektors von einem Abwurfparameter hinterlegt werden;
(b) der Regeleinheit ein Sollwert des Abwurfparameters und/oder des hiermit korrespondierenden Einstellparameters eingegeben wird;
(c) wenigstens ein Istwert des Abwurfparameters mit Hilfe wenigstens eines nahe dem Umfang der Verteilerscheibe angeordneten Sensors ermittelt wird;
(d) in der Regeleinheit der mit Hilfe des Sensors ermittelte Istwert des Abwurfparameters mit dessen Sollwert verglichen wird; und
(e) im Falle einer Abweichung des Istwertes des Abwurfparameters von dem Sollwert um mehr als einen vorherbestimmten Maximalwert der Einstellparameter der Einrichtung zur Veränderung des Streuringsektors nachgeregelt wird, so dass der hiermit korrespondierende Abwurfparameter um weniger als der Maximalwert von dessen Sollwert abweicht.

Die Erfindung bezieht sich ferner auf einen zur Durchführung eines solchen Verfahrens ausgebildeten Scheibenstreuer mit wenigstens einer regelbaren Dosiereinrichtung, mit wenigstens einer unterhalb der Dosiereinrichtung angeordneten, mit Wurfschaufeln versehenen Verteilerscheibe sowie mit wenigstens einer Einrichtung zur Veränderung des Streuringsektors des Streugutes auf dem Boden, wobei zumindest die Einrichtung zur Veränderung des Streuringsektors mit einer Regeleinheit in Wirkverbindung steht, um wenigstens einen Einstellparameter der Einrichtung zur Veränderung des Streuringsektors in Abhängigkeit eines, mit Hilfe wenigstens eines Sensors ermittelten Abwurfparameters zu regeln, wobei

(a) in einer Datenbank der der Einrichtung zur Verstellung des Streuringsektors zugeordneten Regeleinheit funktionale Abhängigkeiten des wenigstens einen Einstellparameters der Einrichtung zur Veränderung des Streuringsektors von dem Abwurfparameter hinterlegt sind;
(b) die Regeleinheit eine Eingabeeinrichtung aufweist, welche eine Eingabe eines gewünschten Sollwertes des Abwurfparameters und/oder des hiermit korrespondierenden Einstellparameters ermöglicht;
(c) der wenigstens eine Sensor nahe dem Umfang der Verteilerscheibe angeordnet ist und wenigstens einen, für den Istwert des Abwurfparameters repräsentativen Messwert liefert;
(d) in der Regeleinheit eine Auswerteelektronik gespeichert ist, welche den mit Hilfe des Sensors ermittelten Istwert des Abwurfparameters mit dessen Sollwert vergleicht, und
(e) im Falle einer Abweichung des Istwertes des Abwurfparameters von dem Sollwert um mehr als einen vorherbestimmten Maximalwert den Einstellparameter der Einrichtung zur Veränderung des Streuringsektors nachregelt, so dass der hiermit korrespondierende Abwurfparameter um weniger als der Maximalwert von dessen Sollwert abweicht.

Derartige Scheibenstreuer finden insbesondere in der Landwirtschaft zur Verteilung von Streugut, wie mineralischen oder organischen Dünger und dergleichen, aber auch in Form von Winterdienststreuern zur Verteilung von Streusalz und/oder Splitt verbreiteten Einsatz. Ihre Vorteile liegen dabei vornehmlich in ihrer einfachen Bedienbarkeit und hohen Leistungsfähigkeit bei verhältnismäßig geringen Investitionskosten. Insbesondere im Falle von landwirtschaftlichen Scheibenstreuern haben sich vornehmlich Zweischeiben-Düngerstreuer etabliert, welche mit einem Paar von Verteilerscheiben mit diesen zugeordneten Dosierorganen ausgestattet sind.
Um für die gewünschte Verteilung des Streugutes auf dem Boden zu sorgen, lassen sich bei modernen Scheibenstreuern dieser Art einerseits die Dosierung des Massenstromes des Streugutes auf die einer jeweiligen Dosiereinrichtung zugeordnete Verteilerscheibe, andererseits die Verteilung des Streugutes durch die Verteilerscheibe(n) steuern bzw. regeln. Für letzteres ist es üblich, Einrichtungen zur Veränderung des Streuringsektors vorzusehen, um den Scheibenstreuer beispielsweise auf verschiedene Arbeitsbreiten, Streugüter und/oder Verteilarten vorzusehen.
Darüber hinaus kommt es für die Qualität des Streuergebnisses bei mit umlaufenden Verteilerscheiben ausgerüsteten, gattungsgemäßen Scheibenstreuern aber auch auf eine möglichst gleichmäßige Verteilung des Streugutes auf dem Boden an, wie beispielsweise der zu bestreuenden Fläche eines Feldes. Nachdem die umlaufende Verteilerscheibe das dieser von ihrer Dosiereinrichtung aufgegebene Streugut zum Scheibenumfang hin beschleunigt hat, wird es fächerartig über einen bestimmten Abwurfbereich abgeschleudert, wonach das Streugut dann mit Abstand von der Verteilerscheibe in einem im wesentlichen ringsegmentförmigen Bereich, dem sogenannten Streuringsektor, auf den Boden fällt. Dabei ist die Massenverteilung des Streugutes quer zur Fahrtrichtung des Schleuderstreuers, also über seine Streubreite hinweg, nicht gleichmäßig, sondern nimmt die Massenverteilung in aller Regel von einem Maximum im mittleren Bereich zu beiden Seiten, nämlich den mit Bezug auf die Verteilerscheibe im Wesentlichen radialen Begrenzungen, ab. Durch Anordnung von zwei gegenläufig angetriebenen Verteilerscheiben nebeneinander, wie sie bei gattungsgemäßen Zweischeibenstreuern üblich sind, lässt sich die Querverteilung des Streugutes im Bereich zwischen den Verteilerscheiben sowie in nahem Lateralabstand von denselben vergleichmäßigen, fällt aber gleichwohl zu beiden Seiten des so erhaltenen, gesamten Streubildes ab. Bei Düngerstreuern wird dies durch das sogenannte Anschlussfahren ausgeglichen, indem die Streubilder im Randbereich überlappt werden. Es ergibt sich hier folglich eine sogenannte Arbeitsbreite, welche dem Abstand der beim Anschlussfahren genutzten Fahrgassen entspricht und welche grundsätzlich kleiner ist als die (gesamte) Streubreite, welche beispielsweise etwa doppelt so groß wie die Arbeitsbreite sein kann. In anderen Anwendungsfällen, wie insbesondere bei Winterdienststreuern, wird hingegen versucht, ein möglichst steilflankiges Streubild zu erreichen, da ein Anschlussfahren hier nicht möglich ist.

Bei einem Scheibenstreuer wird die Querverteilung des Streugutes auf dem Boden zunächst maßgeblich von dem seiner - bzw. einer jeder - Verteilerscheibe erzeugten Streuringsektor, und zwar von dessen Geometrie und örtlicher Lage bestimmt. Diese wiederum werden maßgeblich beeinflusst von den physikalischen Eigenschaften des Streugutes, nämlich zum einen von dem Gleitvermögen der Streugutpartikel auf der Scheibe, zum anderen von deren Flugverhalten nach Verlassen der Scheibe. So verlassen gut gleitende, also relativ glatte und runde, Partikel die Scheibe früher als relativ rauhe und kantige Partikel. In einem Polarkoordinatensystem mit der Achse der Verteilerscheibe als Mittelpunkt wandert also der Streuringsektor in Drehrichtung, je rauher und kantiger die Partikel sind. Andererseits ist die mittlere Flugweite von kleinen, leichten, kantigen oder rauhen Partikeln kürzer als von großen, glatten oder schweren Partikeln, so dass im ersten Fall der Streuringsektor näher an der Verteilerscheibe liegt und zudem eine kürzere radiale Ausdehnung als im zweiten Fall besitzt.

Abgesehen von den streugutspezifischen Einflussfaktoren spielen auch konstruktive Parameter eine Rolle. So wird beispielsweise der Zentriwinkel des Streuringsektors durch den auf die Verteilerscheibe auftreffenden Massenstrom an Streugut, d.h. durch die jeweilige Einstellung der zugehörigen Dosiereinrichtung, in dem Sinne beeinflusst, dass er um so größer wird, je größer der Massenstrom an Streugut bzw. je weiter die Dosiereinrichtung geöffnet ist. Weiterhin beeinflusst der Aufgabepunkt des Streugutes auf die Verteilerscheibe die Lage des Streuringsektors dahingehend, dass er um so weiter gegen die Drehrichtung wandert, je weiter der Aufgabepunkt von der Achse entfernt liegt. Überdies lässt sich der Streuringsektor um die Drehachse der Verteilerscheibe "drehen", wenn der Aufgabepunkt des Streugutes in Umfangsrichtung der Verteilerscheibe verlagert wird. Schließlich bestimmt auch die Drehzahl der Verteiler- oder Verteilerscheiben Ausdehnung und Lage des Streuringsektors, wobei der Streuringsektor um so größer und weiter entfernt von der Verteilerscheibe liegt, je schneller letztere rotiert wird.

Da die streugutspezifischen Eigenschaften, also insbesondere die Gleit- und Flugeigenschaften der eingesetzten Streugutpartikel (fraktion), am wenigsten beherrschbar und am ehesten Schwankungen unterworfen sind, bedient man sich in der Düngetechnik der sogenannten Streutabellen, in welchen für ein bestimmtes Streugut zur Erzielung bestimmter Arbeitsbreiten und Streumengen entsprechende Einstellungen an dem Scheibenstreuer, also beispielsweise die Drehzahl der Verteilerscheiben, die Lage des Aufgabepunktes des Streugutes auf die Verteilerscheiben, die Größe der Dosieröffnung der Dosiereinrichtung etc. ablesbar sind, um das Streugut auf einer bestimmten Arbeitsbreite in einer bestimmten Menge zu verteilen. Diese Streutabellen werden in Streuversuchen aufgenommen und gelten stets nur für das konkret untersuchte Streugut und den hierbei verwendeten Streuer. Da einerseits die Streugüter nicht genormt sind und infolgedessen wechselnde Eigenschaften besitzen (so vermögen sich beispielsweise die physikalischen Eigenschaften von üblicherweise hygroskopischen Mineraldüngerpartikeln in Gegenwart von Feuchtigkeit massiv zu verändern), andererseits auch die Scheibenstreuer sich in konstruktiver Hinsicht unterscheiden, ist es häufig erforderlich, gegebenenfalls vor der Streuarbeit zunächst eine sogenannte Abdrehprobe vorzunehmen, um die Einstellung der Dosieröffnung der Dosiereinrichtung entsprechend dem Ergebnis der Abdrehprobe zu korrigieren, und anschließend eine Streuprobe unter Betriebsbedingungen durchzuführen, um das Streubild bzw. die tatsächliche Verteilung des Streugutes auf dem Boden in etwa ringsegmentförmigen Grenzen durch Einstellmaßnahmen an dem Scheibenstreuer zu optimieren. Selbst dies führt jedoch oft nicht zu einer gleichmäßigen Querverteilung des Streugutes, weil diese durch weitere Faktoren während des Streubetriebs (nachträglich) beeinflusst wird, z. B. die Neigungslage des Streuers bei unebenem Gelände, durch Windeinflüsse, Exponierung des Streugutes gegen Luftfeuchtigkeit oder gar Regen, durch mögliche, oben angesprochene Veränderungen der physikalischen Eigenschaften des Streugutes etc.

Im Stand der Technik wurde bereits erkannt, dass eine Behebung dieser Mängel nur dadurch möglich ist, dass während der Streuarbeit aktuelle Streuzustände aufgenommen werden, um bei Feststellung von Abweichungen in die Einstellung bzw. Steuerung des Scheibenstreuers korrigierend eingreifen zu können. So ist es beispielsweise zur Feststellung der allgemeinen Lage des Abwurfbereichs bekannt, zwei oder mehr Stoßsensoren am Umfang der Verteilerscheibe anzuordnen und einen für die Anzahl an Partikeln pro Zeiteinheit repräsentative Messgröße aufzunehmen (EP 0 682 857 A1).

Im konkreten Fall sind die Stoßsensoren rohrförmig ausgebildet und an einem manuell quer verstellbaren Träger angeordnet, wobei mit einer Sonotrode der von dem Rohr emittierte Schall gemessen wird. Dabei wird von der Überlegung ausgegangen, dass innerhalb des Streuringsektors eine Art Gauß'sche Normalverteilung mit einem Mengenmaximum in der Mitte vorliegt, so dass dann, wenn sich der Sensor im Bereich der größten Partikeldichte befindet, welche der größte Stoßzahl entspricht, die Mitte des Streuringsektors festgestellt worden ist. Durch Veränderung der Einstellung des Streuers (Verlagerung des Aufgabepunktes, Drehzahlveränderung etc.) wird das Maximum in die gewünschte Position verlagert und es wird dann davon ausgegangen, dass sich auch der Streuringsektor in der gewünschten Lage befindet. Indes ist eine Erfassung der Querverteilung des Streugutes über den gesamten Abwurfbereich auf diese Weise nicht möglich und vernachlässigt diese Methode insbesondere die Tatsache, dass das Mengenmaximum nicht notwendigerweise in der Mitte des Streusektors liegen muss. Auch lassen sich aus der Stoßzahl keinerlei Rückschlüsse auf die radiale Ausdehnung des Streuringsektors, also in Wurfrichtung, ziehen. Auch kann der Zentrierwinkel des Streuringsektors mit nur zwei ortsfesten Sonotroden nicht erfasst werden. Folglich ergeben sich insgesamt erhebliche Ungenauigkeiten bei der sensorischen Erfassung des Ist-Zustandes.

Bei einem ähnlichen, aber rein visuell arbeitenden Verfahren (DE 14 57 863 A1) sind die Sensoren als schwenkbar aufgehängte Prallplatten ausgebildet, welche beim Auftreffen der Streugutpartikeln ausgelenkt werden, so dass der Benutzer visuell feststellen kann, ob die Platte von Partikeln getroffen worden ist. Auf diese Weise kann er die radiale Begrenzung des Streuringsektors ungefähr ausloten und den Scheibenstreuer bei unerwünschten Abweichungen entsprechend einstellen. Ansonsten gilt weitestgehend das oben zur EP 0 682 857 A1 gesagte.

Weiterhin ist es bekannt (EP 0 303 325 A1), am Umfang der Verteilerscheibe mehrere Sensoren zu verteilen, um die Lage des Abwurfbereichs an der Verteilerscheibe dem Fahrer zu visualisieren und daraufhin manuell oder automatisch in die Steuerung entsprechend einzugreifen. Wie diese Sensoren arbeiten und welche Messgrößen dabei aufgenommen werden, lässt die Druckschrift offen. In allen vorgenannten Fällen wird nur die Lage des Abwurfbereichs und im erstgenannten Fall die Lage des Mengenmaximums ermittelt und im Falle von Abweichungen korrigierend eingegriffen. Hingegen werden weder die tatsächliche Lage und Ausdehnung des Streuringsektors, d.h. desjenigen Bereichs, in welchem die Partikel tatsächlich auf dem Boden abgelegt werden, noch die dort vorhandene Massenverteilung erfasst. Es wird vielmehr unterstellt, dass die unmittelbar am Scheibenumfang vorhandenen bzw. festgestellten Verhältnisse gleichermaßen am Boden vorliegen, was nicht den Tatsachen entspricht.

Bei einem weiterhin bekannten Zweischeibenstreuer des zuletzt genannten Aufbaus wird neben den Sensoren zur Erfassung des Abwurfbereichs auch die tatsächlich ausgestreute Menge an Streugut erfasst (EP 0 287 165 A1), indem der Behälter mit dem Streugut im Subtraktionsverfahren ausgewogen, also das ausgetragene Streugut pro Zeiteinheit festgestellt wird. Hiermit erhält man zwar eine Aussage über die ausgebrachte Streumenge, nicht aber über die Mengenverteilung im Streuringsektor. Im übrigen ist die Gewichtserfassung konstruktiv sehr aufwendig und wegen des dynamischen Betriebs des Scheibenstreuers auf unebenem Gelände auch ungenau.

Ferner ist es bei einem Einscheibenstreuer bekannt (EP 0 300 580 A1), den Streuringsektor dadurch aufzuweiten oder einzuengen, dass der Aufgabepunkt des Streugutes auf die Verteilerscheibe verlagert wird. Um die aktuelle Ausdehnung des Abwurfbereichs festzustellen, sind lichtoptische oder akustische Sensoren am Scheibenumfang angeordnet, welche nach dem Reflexionsprinzip arbeiten. Mit diesen Sensoren wird nicht nur festgestellt, ob sich überhaupt Partikel im Strahlengang befinden, sondern auch deren Dichte. Bei Abweichungen von eingegebenen Sollwerten wird der Abwurfbereich durch Verlagerung des Aufgabepunktes und/oder die Streumenge durch Steuern der Dosieröffnung entsprechend verändert. Faktisch wird aber auch hier nur der Abwurfbereich an der Scheibe und nicht der Streuringsektor ermittelt und ist die sensorische Erfassung des Streugutes mit nicht unerheblichen Ungenauigkeiten behaftet.

Der DE 195 00 824 A1 ist ein weiteres Verfahren zu entnehmen, bei welchem der Düngerstrom nach Richtung und Geschwindigkeit fotooptisch aufgenommen und die Düngermenge erfasst wird und die ermittelten Daten in einem Rechner zur Ermittlung der Querverteilung und Verteilgenauigkeit eingegeben werden. Aufgrund der errechneten Daten soll der Düngerstreuer nach vorgegebenen Grenzwerten eingestellt werden. Bei diesem Verfahren wird zum einen an einer nicht festgelegten Stelle des Abwurfbereichs gemessen, zum anderen die Zusammenhänge zwischen den gemessenen Werten und den daraufhin vorgenommenen Einstellungen aus der Druckschrift nicht verständlich.

Die DE 197 23 359 A1 beschreibt einen gattungsgemäßen Scheibenstreuer in Form eines Zweischeibenstreuers mit einem Streugutbehälter mit mittels Dosiereinrichtungen regelbaren Dosieröffnungen, unterhalb der Dosieröffnungen angeordneten und um eine im Wesentlichen vertikale Achse umlaufenden Verteilerscheiben mit Wurfschaufeln, welche das Streugut in einem Streuringsektor auf dem Boden verteilen, sowie mit Einrichtungen zum Verändern des Streuringsektors, welche den Aufgabepunkt des Streugutes auf die Verteilerscheiben und/oder die Wurfflügel der Verteilerscheiben zu verstellen oder auch die Neigung der Verteilerscheiben in Bezug auf die Normalebene zu verändern vermögen. Es wird ein Verfahren zur Einstellung eines solchen Zweischeibenstreuers zum Verteilen des Streugut in einstellbarer Menge auf einstellbarer Arbeitsbreite beschrieben, gemäß welchem in einem Rechner für jede Arbeitsbreite, Streumenge (Einstellung der Dosiereinrichtung) und wenigstens einen das Flugverhalten eines bestimmten Streugutes charakterisierenden Abwurfparameter, wie der Abwurfbereich, die Massenverteilung in dem Abwurfbereich und die mittlere Flugweite als Sollwerte, gespeichert werden. Mittels eines nahe dem Umfang der Verteilerscheibe angeordneten Sensors, welcher den Abwurfbereich, in dem die Streugutartikel die Verteilerscheibe verlassen, zu erfassen vermag, werden zusätzlich zu dem Abwurfbereich die Massenverteilung des Streugutes innerhalb des Abwurfbereichs und die absolute Masse des Streugutes pro Zeiteinheit als Istwerte erfasst. Aus dem Istwert der Masse pro Zeiteinheit und der Einstellung der Dosiereinrichtung bzw. der Größe deren Dosieröffnung und/oder aus dem Istwert des Abwurfbereichs und der Massenverteilung sowie der Position der Einrichtung zum Verändern des Streuringsektors kann auf den das Flugverhalten charakterisierenden, aktuellen Wert geschlossen werden. In einer Auswerteelektronik werden die Istwerte mit den Sollwerten verglichen und werden aufgrund der festgestellten Abweichungen die Dosieröffnung der Dosiereinrichtung auf die vorgegebene Streumenge und mittels der Einrichtung zur Veränderung des Streuringsektors der Abwurfbereich, die Massenverteilung innerhalb desselben und die mittlere Flugweite auf die Sollwerte eingestellt.

Indes hat sich auch bei einem solchermaßen ausgebildeten Scheibenstreuer gezeigt, dass die infolge der sensorisch erfassten Istwerte für die jeweiligen Abwurfparameter generierten Einstellparameter der Einrichtung zur Veränderung des Streuringsektors mit nicht unerheblichen Ungenauigkeiten behaftet sind, welche in einer entsprechend ungenauen Einstellung der Einrichtung zur Veränderung des Streuringsektors des Scheibenstreuers resultieren, so dass sich eine nicht optimale Querverteilung des Streugutes (über die Arbeitsbreite hinweg) ergibt.

Der Erfindung liegt daher die Aufgabe zugrunde, ein Verfahren zur Regelung wenigstens einer Einrichtung zur Veränderung des Streuringsektors eines Scheibenstreuers der eingangs genannten Art dahingehend weiterzubilden, dass es aufgrund der sensorisch erfassten Istwerte praktisch beliebiger Abwurfparameter möglich wird, die Einrichtung zur Veränderung des Streuringsektors auf einen möglichst exakten, für die Realität repräsentativen Einstellparameter einzustellen bzw. einzuregeln, welcher für die gewünschte Querverteilung des Streugutes auf dem Boden sorgt.

In verfahrenstechnischer Hinsicht wird diese Aufgabe bei einem Verfahren der eingangs genannten Art dadurch gelöst, dass die in der Datenbank hinterlegten funktionalen Abhängigkeiten des wenigstens einen Einstellparameters von dem Abwurfparameter den Typ der jeweiligen Verteilerscheibe und/oder deren Wurfschaufeln berücksichtigen, wobei es sich bei dem Abwurfparameter um einen für die Umfangsverteilung des Streugutes repräsentativen Parameter handelt, welcher einen Winkelwert in einem Polarkoordinatensystems mit auf der Drehachse der Verteilerscheibe angeordnetem Zentrum umfasst, welcher die Umfangsverteilung des Streugutes zu repräsentieren vermag. In vorrichtungstechnischer Hinsicht sieht die Erfindung zur Lösung dieser Aufgabe bei einem Scheibenstreuer der eingangs genannten Art dementsprechend vor, dass die in der Datenbank hinterlegten funktionalen Abhängigkeiten des wenigstens einen Einstellparameters von dem Abwurfparameter den Typ der jeweiligen Verteilerscheibe und/oder deren Wurfschaufeln berücksichtigen, wobei es sich bei dem Abwurfparameter um einen für die Umfangsverteilung des Streugutes repräsentativen Parameter handelt, welcher einen Winkelwert in einem Polarkoordinatensystems mit auf der Drehachse der Verteilerscheibe angeordnetem Zentrum umfasst, welcher die Umfangsverteilung des Streugutes zu repräsentieren vermag. Die Erfindung beruht auf der Erkenntnis, dass die jeweils zur Erfassung eines oder mehrerer Abwurfparameter verwendeten Sensoren stets nur einige, für die Abwurfparameter repräsentative Werte zu erfassen vermögen, wohingegen der Typ der jeweils verwendeten Verteilerscheibe oder der Kombination von Verteilerscheibe/Wurfschaufeln zu einer Veränderung praktisch sämtlicher Abwurfparameter führt. Folglich führt die Verwendung einer anderen Verteilerscheibe und/oder anderer Wurfschaufeln notwendigerweise zu fehlerbehafteten Einstellparametern, wenn lediglich einige Abwurfparameter sensorisch erfasst werden und hieraus ein Einstellparameter abgeleitet wird, ohne zu berücksichtigen, dass sich auch andere - sensorisch nicht erfasste - Abwurfparameter hierdurch verändert haben, welche im Grunde einen demgegenüber verschiedenen Einstellparameter erforderten. Lediglich exemplarisch sei in diesem Zusammenhang der Austausch einer Verteilerscheibe gegen eine andere mit demgegenüber größerem Umfang erwähnt. Letztere führt bekanntlich zu einer höheren Abwurfgeschwindigkeit, welche beispielsweise mittels eines Impulssensors, wie er in der oben zitierten DE 197 23 359 A1 vorgeschlagen wird, erfasst werden kann. Indes beaufschlagt die größere Verteilerscheibe das Streugut auch z.B. einerseits mit einem anderem Abwurfwinkel (in Bezug auf die Radialrichtung), da es beim Entlanggleiten an den (längeren) Wurfschaufeln eine höhere Beschleunigung erführt, was mit einem derartigen Impulssensor nicht erfasst werden kann. Andererseits beaufschlagt die größere Verteilerscheibe das Streugut z.B. auch mit einem höheren Drall (Eigenrotation des Streugutes), welcher sensorisch im Prinzip gar nicht erfasst werden kann. Beides resultiert in einer Veränderung des Streuringsektors (zusätzlich zu dessen Veränderung infolge der sensorisch erfassten Geschwindigkeit), welche bei der Nachregelung oder Einstellung des Einstellparameters der Einrichtung zur Veränderung des Streuringsektors unberücksichtig bleibt, was in einer fehlerbehafteten Einstellung der Einrichtung zur Veränderung des Streuringsektors und folglich zu einer nicht optimalen Querverteilung des Streugutes in dem jeweiligen Streuringsektor führt.

Die Erfindung begegnet diesem Problem nun dadurch, dass die in der Datenbank hinterlegten funktionalen Abhängigkeiten des wenigstens einen Einstellparameters von dem Abwurfparameter den Typ der jeweiligen Verteilerscheibe und/oder deren Wurfschaufeln bereits berücksichtigen, d.h. die Regeleinheit "weiß" nun, um welchen Typ Verteilerscheibe und/oder Wurfschaufeln es sich aktuell handelt und vermag hieraus anhand des sensorisch erfassten Abwurfparameters die hiermit für die jeweilige Verteilerscheibe bzw. Wurfschaufel richtige Einstellparameter der Einrichtung zur Veränderung des Streuringsektors zu ermitteln, so dass sich die gewünschte Querverteilung an Streugut auf dem Boden ergibt. Die Regelung des Einstellparameters der Einrichtung zur Veränderung des Streuringsektors kann dann in grundsätzlich beliebiger Weise erfolgen, indem beispielsweise die Differenz des sensorisch ermittelten Istwertes des Abwurfparameters von dem voreingegebenen Sollwert gebildet und hieraus anhand der in der Datenbank hinterlegten funktionalen Abhängigkeit des Einstellparameters von dem Abwurfparameter die erforderliche Veränderung des Einstellparameters ermittelt wird, oder der Einstellparameter der Einrichtung zur Veränderung des Streuringsektors wird z.B. so lange nachgeregelt, bis der hiermit korrespondierende Abwurfparameter um weniger als der vorherbestimmte Maximalwert, welcher im Übrigen etwa 0 sein oder freilich auch eine gewisse Toleranz darstellen kann, von dem Sollwert abweicht.

Darüber hinaus macht es die Erfindung möglich, den sogenannten "Mengeneffekt" zu eliminieren, demgemäß das Streubild (die Streugutverteilung auf dem Boden) verändert wird, wenn die Dosiermenge (sei es aufgrund einer geänderten Fahrgeschwindigkeit, sei es aufgrund einer lokal höheren oder geringeren Ausbringmenge oder sei es aus anderen Gründen) verändert wird. Aufgrund der streuscheiben- und/oder wurfflügelspezifischen Regelung des Einstellparameters der Einrichtung zur Veränderung des Streuringsektors vermag auch insoweit eine vollautomatische, exakte Korrektur des Streubildes erfolgen, sobald eine unerwünschte Änderung des Streubildes sensorisch erfasst worden ist.

Wie bereits angedeutet, sollten die in der Datenbank hinterlegten funktionalen Abhängigkeiten des wenigstens einen Einstellparameters der Einrichtung zur Veränderung des Streuringsektors von dem Abwurfparameter ferner vorzugsweise - die physikalischen Eigenschaften des jeweiligen Streugutes, insbesondere dessen Flugeigenschaften; und/oder

- den jeweiligen Massenstrom an mittels der Dosiereinrichtung auf die Verteilerscheibe aufgegebenem Streugut; und/oder
- die jeweilige Arbeitsbreite
berücksichtigen, wie es als solches aus dem oben erwähnten Stand der Technik gemäß DE 197 23 359 A1 bekannt ist.

Die Sollwerte des Abwurfparameters oder des hiermit korrespondierenden Einstellparameters für verschiedene Typen von Verteilerscheiben und/oder deren Wurfschaufeln sowie insbesondere ferner für

- die physikalischen Eigenschaften verschiedener Streugüter; und/oder
- verschiedene Massenströme an mittels der Dosiereinrichtung auf die Verteilerscheibe aufgegebenem Streugut; und/oder
- verschiedene Arbeitsbreiten
können insbesondere experimentell ermittelt und in die Regeleinheit eingegeben werden. So können beispielsweise für jeden Typ Verteilerscheibe bzw. für jede Kombination von Verteilerscheibe mit eine jeweiligen Typ Wurfschaufeln für verschiedene Streugüter, Massenströme und Arbeitsbreite Sollwerte des Abwurfparameters oder des hiermit korrespondierenden Einstellparameters experimentell ermittelt und dem Benutzer zur Verfügung gestellt werden, wie beispielsweise anhand von verteilerscheiben- bzw. wurfschaufelspezifischer Streutabellen, welche den Verteilerscheiben in gedruckter Form beigelegt oder im Internet abrufbar. Insbesondere können in der der Regeleinheit zugeordneten Datenbank derartige Sollwerte hinterlegt sein, welche der Benutzer bedarfsweise abrufen und auswählen kann.

Wie bereits angedeutet, kann es sich bei der Einrichtung zur Veränderung des Streuringsektors um wenigstens eine Einrichtung aus der Gruppe

- Einrichtung zur Verstellung des Aufgabepunktes des Streugutes auf die Verteilerscheibe, bei deren Einstellparameter es sich um den Aufgabepunkt des Streugutes auf die Verteilerscheibe handelt (welcher beispielsweise aktuatorisch verstellt werden kann);
- Einrichtung zur Veränderung der Drehzahl der Verteilerscheibe, bei deren Einstellparameter es sich um die Drehzahl der Verteilerscheibe handelt (deren Antriebsorgan beispielsweise beschleunigt oder verlangsamt werden kann);
- Einrichtung zur Verstellung der Neigung der Verteilerscheibe, bei deren Einstellparameter es sich um den Neigungswinkel der Verteilerscheibe handelt (welcher beispielsweise aktuatorisch verstellt werden kann); und
- Einrichtung zur Verstellung der Wurfschaufeln der Verteilerscheibe, bei deren Einstellparameter es sich um die Relativposition der Wurfschaufeln in Bezug auf die Verteilerscheibe handelt (welche beispielsweise aktuatorisch verstellt werden kann),

handeln, welche als solche aus dem Stand der Technik bekannt sind und dazu dienen, den Streuringsektor, innerhalb dessen das von der Verteilerscheibe abgeworfene Streugut auf den Boden fällt, zu verändern. Wird beispielsweise der Aufgabepunkt des Streugutes auf die Verteilerscheibe gegen/in Drehrichtung der Verteilerscheibe verändert, so bleibt die geometrische Form des Streuringsektors im Wesentlichen unverändert, wird aber gegen/in Drehrichtung der Verteilerscheibe verlagert, indem es um die Rotationsachse der Verteilerscheibe gedreht wird. Überdies beeinflusst der Aufgabepunkt des Streugutes auf die Verteilerscheibe die Lage des Streuringsektors dahingehend, dass er um so weiter gegen die Drehrichtung der Verteilerscheibe wandert, je weiter der Aufgabepunkt von der Drehachse entfernt liegt bzw. je weiter radial außen sich der Aufgabepunkt befindet. Wird z.B. die Neigung der Verteilerscheibe oder auch des gesamten Scheibenstreuers verändert, so wandert der Streuringsektor in dem abgesenkten Radialabschnitt der Verteilerscheibe näher zu deren Drehachse hin, während er in dem demgegenüber angehobenen Radialabschnitt der Verteilerscheibe weiter von deren Drehachse fort wandert; der Streuringsektor wird folglich "verzerrt". Wird z.B. die Drehzahl der Verteilerscheibe erhöht/abgesenkt, so wird der Streuringsektor insgesamt vergrößert/verkleinert. In jedem Fall lässt sich der Streuringsektor an die gewünschte Querverteilung des Streugutes anpassen, wobei selbstverständlich auch mehrere solcher Einrichtungen zur Veränderung des Streuringsektors, wie beispielsweise sowohl eine Einrichtung Veränderung des Aufgabepunktes als auch eine Einrichtung zur Veränderung der Drehzahl der Verteilerscheibe, wie sie im Übrigen insbesondere bei hydraulisch oder elektrisch angetriebenen Scheibenstreuern ohnehin in aller Regel vorhanden ist, vorgesehen sein können, welche von der Regeleinheit in Abhängigkeit der sensorisch erfassten Abwurfparameter synchron geregelt werden können.

Bei dem Abwurfparameter handelt es sich um einen für die Umfangsverteilung des Streugutes repräsentativen Parameter, wobei dieser Parameter einen Winkelwert in einem Polarkoordinatensystems mit auf der Drehachse der Verteilerscheibe angeordnetem Zentrum umfasst, welcher die Umfangsverteilung des Streugutes zur repräsentieren vermag. Ein solcher Winkelwert kann z.B. denjenigen Winkel in dem Polarkoordinatensystem bezeichnen, an welchem die maximale Masse an Streugut von der Verteilerscheibe abgeworfen wird. Alternativ oder zusätzlich kann der Winkelwert beispielsweise auch einen Winkel bezeichnen, welcher die Verteilungskurve der Masse an ausgebrachtem Streugut über den Umfang der Verteilerscheibe beschreibt, wie ein bestimmtes Quantil, z.B. ein 50% Quantil, bei welchem rechts und links (bzw. im und entgegen dem Uhrzeigersinn) dieses Winkels jeweils 50 Mass.-% an Streugut verteilt werden ("$\varphi_{50}$"), ein 10% bzw. 90% Quantil, bei welchem rechts und links bzw. links und rechts (d.h. im und entgegen bzw. entgegen und im Uhrzeigersinn) dieses Winkels 10 Mass.-% und 90 Mass.-% bzw. 90 Mass.-% und 10 Mass.-% an Streugut verteilt werden ("$\varphi_{10}$" bzw. "$\varphi_{90}$") etc. Ein oder mehrere solcher, für die Umfangsverteilung des Streugutes repräsentativer Winkel kann/können dann z.B. als Sollwert(e) eingegeben werden - bzw. insbesondere, wie oben erwähnt, als bereits in der Datenbank voreingegebene Sollwerte abgerufen bzw. ausgewählt werden - und können die sensorisch ermittelten Istwerte dieses/dieser Winkels sodann auf den/die eingegebenen bzw. ausgewählten Sollwert(e) nachgeregelt werden.

Der Abwurfparameter kann beispielsweise aus einem oder mehreren sensorisch erfassten Messwert(en) aus der Gruppe

-　Massenstrom des in einem jeweiligen Umfangsbereich von der Verteilerscheibe abgeworfenem Streugutes;
-　Geschwindigkeit des in einem jeweiligen Umfangsbereich von der Verteilerscheibe abgeworfenen Streugutes; und
-　Richtung des in einem jeweiligen Umfangsbereich von der Verteilerscheibe abgeworfenen Streugutes ermittelt werden.

Was die in der Datenbank der Regeleinheit hinterlegten funktionalen Abhängigkeiten des/der Einstellparameter(s) von dem Abwurfparameter betrifft, so kann zweckmäßigerweise vorgesehen sein, dass in der Datenbank der Regeleinheit für jeden Typ einer jeweiligen Verteilerscheibe und/oder deren Wurfschaufeln

-　separate funktionale Abhängigkeiten des wenigstens einen Einstellparameters von dem Abwurfparameter oder
-　separate Faktoren, um die funktionalen Abhängigkeiten des wenigstens einen Streuparameters von dem Abwurfparameter an die jeweilige Verteilerscheibe und/oder deren Wurfschaufeln anzupassen,

hinterlegt werden. Im erstgenannten Fall können demnach einem jeweiligen Typ Verteilerscheibe bzw. einer jeweiligen Kombination von Verteilerscheibe und Wurfschaufeln separate funktionale Abhängigkeiten zugeordnet sein, welche je nach in Betrieb befindlicher Verteilerscheibe bzw. Wurfschaufeln abgerufen werden, während im letztgenannten Fall nur eine oder mehrere, für eine Gruppe von Verteilerscheiben bzw. Kombinationen von Verteilerscheiben dun Wurfschaufeln gültige funktionale Abhängigkeiten hinterlegt sind, welche je nach in Betrieb befindlicher Verteilerscheibe bzw. Wurfschaufeln mit dem zugehörigen Faktor oder den zugehörigen Faktoren beaufschlagt werden. Entsprechendes gilt für die funktionalen Abhängigkeiten des/der Einstellparameter(s) von weiteren Parametern, wie insbesondere den oben genannten physikalischen (Flug)eigenschaften des jeweils eingesetzten Streugutes, des jeweils gewünschten Massenstromes an Streugut und/oder der jeweils gewünschten Arbeitsbreite. Bei den funktionalen Abhängigkeiten des wenigstens einen Einstellparameters von dem Abwurfparameter kann es sich im Übrigen z.B. um Kennlinien, Kennkurven oder Kennfelder handeln.

Um der Regeleinheit "mitzuteilen", welcher Typ Verteilerscheibe oder welche Kombination von Verteilerscheibe und Wurfschaufeln aktuell eingesetzt wird, ist es einerseits denkbar, dass der Typ der jeweiligen Verteilerscheibe und/oder deren Wurfschaufeln in eine Eingabeeinrichtung der Regeleinheit eingegeben wird, wobei in der Datenbank insbesondere eine Auswahl an Verteilerscheiben/Wurfschaufeln abgespeichert und auf einer mit der Datenbank in Verbindung stehenden Anzeigeeinrichtung angezeigt werden kann, von welchen der Benutzer die jeweilige Kombination auswählen kann, indem er beispielsweise die jeweilige, auf der Anzeigeeinrichtung angezeigte Kombination auswählt. Andererseits ist es insbesondere denkbar, dass der Typ der jeweiligen Verteilerscheibe und/oder deren Wurfschaufeln sensorisch, insbesondere berührungsfrei, wie beispielsweise optisch, mittels Ultraschall oder elektromagnetisch, z.B. mittels eines Radarsensors, erfasst wird, wobei hierfür ein separater Sensor vorgesehen sein oder auch der zur sensorischen Ermittlung des Abwurfparameters dienende Sensor verwendet werden kann. Alternativ kann der Scheiben-/Wurtschaufeltyp z.B. mittels eines RFID-Transponders der jeweiligen Verteilerscheibe und/oder deren Wurfschaufeln erfasst werden. In beiden Fällen wird eine manuelle Eingabe des Verteilerscheiben- bzw. Wurfschaufeltyp seitens des Benutzers entbehrlich und vermag die Regeleinheit automatisch zu erkennen, um welchen Typ Verteilerscheibe/Wurfschaufel es sich gerade handelt, um die entsprechenden funktionalen Abhängigkeiten des Einstellparameters von dem Abwurfparameter zu aktivieren.

In Bezug auf den Sensor kann gemäß einer vorteilhaften Ausgestaltung vorgesehen sein, dass der Istwert des Abwurfparameters mit Hilfe wenigstens eines berührungsfreien Sensors ermittelt wird, wobei der berührungsfreie Sensor insbesondere ein Messsignal mit einer vertikal nach oben gerichteten Richtungskomponente aussendet. Der beispielsweise auf einem ähnlichen Höhenniveau wie die Verteilerscheibe selbst oder auf einem demgegenüber tieferen Höhenniveau sendet folglich seine Messsignale vorzugsweise etwa senkrecht oder schräg nach oben aus, also unter einem Winkel größer 0° und kleinergleich 90° in Bezug auf die Horizontalebene, wodurch Störsignale infolge von bewegten Pflanzenteilen oder Bodenpartikeln zuverlässig vermieden werden. Bei dem berührungslosen Sensor kann es sich insbesondere um einen Radar- oder Ultraschallsensor, handeln, wobei erstgenannte Sensoren sich als besonders vorteilhaft erwiesen haben. So ist es mittels Radarsensoren, wie z.B. Doppler-Radarsensoren, möglich, einerseits die Massenverteilung des von der Verteilerscheibe abgeworfenen Streugutes anhand der Energiedichte (Signalamplitude), andererseits die Geschwindigkeit des Streugutes anhand der geschwindigkeitsproportionalen Frequenzverschiebung des an den Streugutpartikeln reflektierten Signals aufgrund des Doppler-Effektes sensorisch zu erfassen. Wird ein solcher Sensor demnach über den Abwurfbereich der Streugutpartikel von der Verteilerscheibe hinweg bewegt, so lassen sich hieraus z.B. einerseits die vorgenannten Winkel, welche für die Massenverteilung des Streugutes um den Umfang der Verteilerscheibe repräsentativ sind, andererseits die dortigen Geschwindigkeiten, welche für die laterale Ausdehnung des Streuringsektors repräsentativ sind, ermitteln. So vermag insbesondere ein Doppler-Radarsensor, wenn seine Radarwellen von den von einer Verteilerscheibe abgeworfenen Streugutpartikeln diffus reflektiert und empfangen werden, aufgrund des Doppler-Effektes ein proportional zur Geschwindigkeit der Streugutpartikel frequenzverschobenes Radarsignal zu liefern:

$$f_D = 2 \cdot f_0 \cdot v/c_0 \cdot \cos(\alpha)$$

wobei

$f_d$:     Dopplerfrequenz;
$f_0$:     Sendefrequenz des Radarsensors;
$v$:     Geschwindigkeitsbetrag der Streugutpartikel;
$c_0$:     Lichtgeschwindigkeit; und
$\alpha$:     Winkel zwischen der Bewegungsrichtung der Streugutpartikel und der Verbindungsgeraden zwischen dem Radarsensor und dem erfassten Partikel.

Darüber hinaus ist die empfangene Radarsignalamplitude proportional zur Masse der Streugutpartikel:

$$\frac{P_e}{P_s} = \frac{g^2 \cdot \lambda^2 \cdot \delta}{(4\pi) \cdot D^4}$$

wobei

$P_e$:     Leistung des empfangenen Signals;
$P_s$:     Sendeleistung;
$\lambda$:     Wellenlänge des Sendesignals (beispielsweise 12 mm bei 24 GHz);
$\delta$:     Radarrückstreuquerschnitt (Radar Cross Section, RCS) eines Streugutpartikels, welcher proportional zur Größe der Streugutpartikel ist;
$D$:     Abstand des Radarsensors von den Partikeln;
$g$:     Antennengewinn ("gain") bei gleicher Sende-/Empfangsantenne.

In vorteilhafter Ausgestaltung der Erfindung kann einerseits vorgesehen sein, dass wenigstens ein Sensor konzentrisch zur Drehachse der Verteilerscheibe, insbesondere um einen Winkel von wenigstens 100°, vorzugsweise um einem Winkel von wenigstens 120°, höchst vorzugsweise um einen Winkel von wenigstens 140°, z.B. um einen Winkel im Bereich von etwa 150° bis etwa 180°, verschwenkt wird, um möglichst den gesamten Abwurfbereich der Streugutpartikel von der Verteilerscheibe zu erfassen, wobei der Sensor insbesondere sowohl in der einen als auch in der anderen Schwenkrichtung den Abwurfparameter oder hierfür repräsentative Messwerte in unterschiedlichen Winkelpositionen liefert. Der Sensor wird folglich vorzugsweise mehr oder minder kontinuierlich durch den gesamten Abwurfbereich der Streugutpartikel mit einer konstanten oder auch veränderbaren Geschwindigkeit hin und her bewegt, wobei er aufeinanderfolgende Messwerte für die jeweilige Winkelposition zu liefern vermag, in welcher es sich gerade befindet. Der Drehantrieb eines solchen Sensors sowie dessen Bewegungsübertragung auf einen Träger des Sensors sollte im Hinblick auf üblicherweise auftretende Erschütterungen und Vibrationen während des Betriebs sowie auf die einwirkenden Verunreinigungen von festen Streugut(fein)partikeln sowie aufgewirbeltem Staub robust und so weit wie möglich vor äußeren Einwirkungen geschützt sein. Eine diesbezüglich vorteilhafte Antriebsanordnung eines oder mehrerer, koaxial zur Drehachse der Verteilerscheibe verschwenkbarer Sensoren ist der zum Prioritätsdatum der vorliegenden Anmeldung noch nicht veröffentlichten DE 10 2013 002 751.9 zu entnehmen.

Andererseits kann in vorteilhafter Ausgestaltung der Erfindung stattdessen vorgesehen sein, dass eine Mehrzahl an Sensoren konzentrisch, insbesondere um einen Winkel von wenigstens 100°, vorzugsweise um einem Winkel von wenigstens 120°, höchst vorzugsweise um einen Winkel von wenigstens 140°, z.B. um einen Winkel im Bereich von etwa 150° bis etwa 180°, um möglichst den gesamten Abwurfbereich der Streugutpartikel von der Verteilerscheibe zu erfassen, um den Umfang der Drehachse der Verteilerscheibe herum angeordnet wird, wobei jeder Sensor den Abwurfparameter oder hiefür repräsentative Messwerte für seine jeweilige Umfangsposition liefert. Bei einem solchen Sensorarray, dessen Sensoren vorzugsweise unter äquidistantem Abstand auf einer Kreisbahn angeordnet sind, deren Mittelpunkt von der Drehachse der Verteilerscheibe geschnitten wird, vermag jeder Sensor kontinuierlich Messwerte für seine jeweilige Winkelposition zu liefern. Dabei können z.B. wenigstens etwa 15 Sensoren, vorzugsweise wenigstens etwa 20 Sensoren, höchst vorzugsweise wenigstens etwa 28 Sensoren vorgesehen sein.

Um die Relativanordnung des bzw. der Sensor(en) optimal an die Geometrie des jeweils verwendeten Typs von Verteilerscheibe und/oder Wurfschaufeln anpassen zu können, kann es ferner zweckmäßig sein, wenn der (jeweilige) Sensor in Abhängigkeit der jeweiligen Verteilerscheibe und/oder deren Wurfschaufeln in eine für die jeweilige Verteilerscheibe und/oder deren Wurfschaufeln vorgegebene Position im Wesentlichen radial in Bezug auf die Drehachse der Verteilerscheibe, verstellt wird, was beispielsweise dadurch geschehen kann, dass der Sensor an einem - drehangetriebenen oder stationären - Träger mit in Bezug auf die Verteilerscheibe radialer Erstreckungsrichtungskomponente an verschiedenen Radialpositionen festlegbar ist. Alternativ oder zusätzlich ist es in diesem Zusammenhang denkbar, dass eine Mehrzahl an in unterschiedlichen - insbesondere ortsfesten - Radialpositionen in Bezug auf die Verteilerscheibe angeordneten Sensoren vorgesehen ist, welche in Abhängigkeit der jeweiligen Verteilerscheibe und/oder deren Wurfschaufeln aktiviert bzw. deaktiviert werden. Dies kann wiederum manuell, wie beispielsweise durch entsprechendes Anwählen auf einer Anzeigeeinrichtung, oder automatisch erfolgen, wenn ein bestimmter Typ Verteilerscheibe/Wurfschaufeln sensorisch, insbesondere mittels eines in die Verteilerscheibe/Wurfschaufel integrierten RFID-Transponders, erkannt worden ist.

Im Übrigen ist es selbstverständlich zweckmäßig, wenn die obigen Verfahrensschritte (c) bis (e) im Wesentlichen kontinuierlich oder in periodischen Zeitabständen während der Streuarbeit durchgeführt werden, wobei sie insbesondere mehr oder minder in Echtzeit durchgeführt werden können.

Wie eingangs erwähnt, werden insbesondere in der Landwirtschaft gegenwärtig in der Regel Zweischeibenstreuer eingesetzt, welche zwei unter seitlichem Abstand angeordnete Verteilerscheiben besitzen, welche üblicherweise - wenn auch nicht notwendigerweise - in gegenläufiger Richtung rotieren, wobei die (von oben betrachtet) in Fahrtrichtung linke Verteilerscheibe entgegen dem Uhrzeigersinn umläuft, während die (von oben betrachtet) in Fahrtrichtung rechte Verteilerscheibe im Uhrzeigersinn umläuft (es rotieren folglich beide Verteilerscheiben entgegen der Fahrtrichtung betrachtet von innen nach außen). Rein exemplarisch sei in Bezug auf einen solchen Zweischeibenstreuer auf die DE 10 2005 015 236 A1 verwiesen.

Die Erfindung bietet sich einerseits für Einscheibenstreuer sowie andererseits insbesondere für Zweischeibenstreuer, wie für solche der vorgenannten Art, an, wobei folglich in vorteilhafter Ausgestaltung vorgesehen sein kann, dass der Scheibenstreuer wenigstens (oder genau) zwei regelbare Dosiereinrichtungen, je eine unterhalb einer jeweiligen Dosiereinrichtung angeordnete, mit Wurfschaufeln versehene Verteilerscheibe sowie je eine, einer jeweiligen Verteilerscheibe zugeordnete Einrichtung zur Veränderung des Streuringsektors des Streugutes auf dem Boden umfasst.

Bei einem derartigen Zweischeibenstreuer kann gemäß einer Ausführungsvariante vorgesehen sein, dass

(c) der wenigstens eine Istwert des Abwurfparameters mit Hilfe je wenigstens eines, nahe dem Umfang einer jeden Verteilerscheibe angeordneten Sensors für jede Verteilerscheibe unabhängig voneinander ermittelt wird;

(d) in der Regeleinheit der mit Hilfe des jeweiligen Sensors ermittelte Istwert des Abwurfparameters mit dessen Sollwert verglichen wird und

(e) im Falle einer Abweichung des Istwertes des Abwurfparameters von dem Sollwert um mehr als einen vorherbestimmten Maximalwert der Einstellparameter einer jeweiligen Einrichtung zur Veränderung des Streuringsektors unabhängig voneinander nachgeregelt wird, so dass der jeweilige, hiermit korrespondierende Abwurfparameter für jede Verteilerscheibe um weniger als der Maximalwert von dessen Sollwert abweicht.

Folglich kann jede, einer jeweiligen Verteilerscheibe zugeordnete Einrichtung zur Veränderung des Streuringsektors in Abhängigkeit von den jeweils sensorisch erfassten Istwerten des Abwurfparameters unabhängig voneinander geregelt werden, was insbesondere den Vorteil hat, dass der Regeleinheit beispielsweise auch für jede Einrichtung zur Veränderung des Streuringsektors unterschiedliche Sollwerte für den für verschiedene Arbeitsbreiten, Massenströme an Streugut etc. repräsentativen Abwurfparameter eingegeben werden können, wie es in verschiedenen Streusituationen, wie beispielsweise beim Grenz- oder Randstreuen, beim Hangstreuen, beim Keilstreuen und dergleichen erforderlich ist.

Während beim "normalen" Anschlussfahren entlang der Fahrgassen im Feldinnern folglich der Regeleinheit zweckmäßig für jede Einrichtung zur Veränderung des Streuringsektors einander entsprechende bzw. gleiche Sollwerte des Abwurfparameters oder des hiermit korrespondierenden Einstellparameters Abwurfparameter eingegeben werden, kann bei einem solchermaßen ausgestalteten Zwei- bzw. Mehrscheibenstreuer vorzugsweise vorgesehen sein, dass für den Fall, dass die auf dem Boden abgelegten Streuringsektoren verschieden sein sollen (wie beispielsweise aufgrund einer der oben genannten Streusituationen), mehrere, für die jeweiligen Einrichtungen zur Veränderung des Streuringsektors verschiedene Sollwerte des Abwurfparameters und/oder des hiermit korrespondierenden Einstellparameters eingegeben wird/werden.

Indes kann gemäß einer alternativen Ausführungsvariante bei einem derartigen Zweischeibenstreuer auch vorgesehen sein, dass

(c) der wenigstens eine Istwert des Abwurfparameters mit Hilfe wenigstens eines, nahe dem Umfang nur einer Verteilerscheibe angeordneten Sensors für diese Verteilerscheibe ermittelt wird;

(d) in der Regeleinheit der mit Hilfe des dieser Verteilerscheibe zugeordneten Sensors ermittelte Istwert des Abwurfparameters mit dessen Sollwert verglichen wird; und

(e) im Falle einer Abweichung des Istwertes des Abwurfparameters von dem Sollwert um mehr als einen vorherbestimmten Maximalwert der Einstellparameter sämtlicher Einrichtungen zur Veränderung des Streuringsektors in einander entsprechender Weise nachgeregelt wird, so dass der hiermit korrespondierende Abwurfparameter der mit dem Sensor versehenen Verteilerscheibe um weniger

als der Maximalwert von dessen Sollwert abweicht. Folglich kann jede, einer jeweiligen Verteilerscheibe zugeordnete Einrichtung zur Veränderung des Streuringsektors in Abhängigkeit von den sensorisch nur an einer Verteilerscheibe erfassten Istwerten des Abwurfparameters geregelt werden, indem die derjenigen Verteilerscheibe zugeordnete Einrichtung zur Veränderung des Streuringsektors, welche nicht mit Sensoren versehen ist, entsprechend der derjenigen Verteilerscheibe zugeordneten Einrichtung zur Veränderung des Streuringsektors, von welcher der Sensor für die Einstellparameter repräsentative Istwerte zu liefern vermag, synchron geregelt bzw. - im Falle gegenläufig angetriebener Verteilerscheiben - "gespiegelt" wird. Beim "normalen" Anschlussfahren entlang der Fahrgassen im Feldinnern kann der Regeleinheit folglich ein für beide Einrichtungen zur Veränderung des Streuringsektors gleicher Sollwert des Abwurfparameters oder des hiermit korrespondierenden Einstellparameters eingegeben werden, woraufhin im Falle einer übermäßigen Abweichung des sensorisch erfassten Istwertes von dem Sollwert auf einer Seite der Einstellparameter der Einrichtungen zur Veränderung des Streuringsektors beider Seiten so lange entsprechend nachgeregelt wird, bis der hiermit korrespondierende Abwurfparameter der mit dem Sensor versehenen Verteilerscheibe dem Sollwert wieder weitgehend entspricht. Sofern beispielsweise aufgrund gewünschter unterschiedlicher Arbeitsbreiten, Massenströme an Streugut etc. verschiedene Streuringsektoren erwünscht sind, wie dies z.B. beim Grenz- oder Randstreuen, beim Hangstreuen, beim Keilstreuen und dergleichen der Fall ist, kann dies auch im Falle nur einer mit einem Sensor versehenen Verteilerscheibe erreicht werden, indem die Regelung z.B. auf der nicht mit einem Sensor versehenen Verteilerscheibe für einen solchen Streuvorgang deaktiviert wird. Alternativ kann beispielsweise dann, wenn sich beim Randstreuen die mit einem Sensor versehene Verteilerscheibe an der dem Feldrand zugewandten Seite befindet, die Regelung der dieser Verteilerscheibe zugeordneten Einrichtung zur Veränderung des Streuringsektors auf den neuen Sollwert eingestellt werden, während die Einrichtung zur Veränderung des Streuringsektors der dem Feldinnern zugewandten, nicht mit einem Sensor ausgestatteten Verteilerscheibe unterbrochen und die Einrichtung zur Veränderung des Streuringsektors gemäß dem oder den letzten Parametern konstant gehalten wird. Umgekehrt kann beispielsweise dann, wenn sich beim Randstreuen die mit einem Sensor versehene Verteilerscheibe an der dem Feldinnern zugewandten Seite befindet, die Regelung der dieser Verteilerscheibe zugeordneten Einrichtung zur Veränderung des Streuringsektors entsprechend dem vorherigen Sollwert fortgeführt werden, während die Einrichtung zur Veränderung des Streuringsektors der dem Feldrand zugewandten, nicht mit einem Sensor ausgestatteten Verteilerscheibe deaktiviert und die Einrichtung zur Veränderung des Streuringsektors dieser Verteilerscheibe gemäß zuvor eingegebenen Einstellparametern gesteuert wird. Im letztgenannten Fall ist es ferner denkbar, dass solche, für die jeweilige Streusituation geeignete Einstellparameter aus vorherigen Regelungen gespeichert und für diejenige Einrichtung zur Veränderung des Streuringsektors, welche der nicht mit einem Sensor versehenen Verteilerscheibe zugeordnet ist, entsprechend des jeweiligen Streuscheiben- bzw. Wurfschaufeltyps, der Arbeitsbreite, der Streugutart etc. angewendet werden.

**Patentansprüche**

1. Verfahren zur Regelung wenigstens einer Einrichtung zur Veränderung des Streuringsektors eines Scheibenstreuers, welcher wenigstens eine regelbare Dosiereinrichtung, wenigstens eine unterhalb der Dosiereinrichtung angeordnete, mit Wurfschaufeln versehene Verteilerscheibe sowie die wenigstens eine Einrichtung zur Veränderung des Streuringsektors des Streugutes auf dem Boden umfasst, wobei

(a) in einer Datenbank einer der Einrichtung zur Verstellung des Streuringsektors zugeordneten Regeleinheit funktionale Abhängigkeiten wenigstens eines Einstellparameters der Einrichtung zur Veränderung des Streuringsektors von einem Abwurfparameter hinterlegt werden;
(b) der Regeleinheit ein Sollwert des Abwurfparameters und/oder des hiermit korrespondierenden Einstellparameters eingegeben wird;
(c) wenigstens ein Istwert des Abwurfparameters mit Hilfe wenigstens eines nahe dem Umfang der Verteilerscheibe angeordneten Sensors ermittelt wird;
(d) in der Regeleinheit der mit Hilfe des Sensors ermittelte Istwert des Abwurfparameters mit dessen Sollwert verglichen wird; und
(e) im Falle einer Abweichung des Istwertes des Abwurfparameters von dem Sollwert um mehr als einen vorherbestimmten Maximalwert der Einstellparameter der Einrichtung zur Veränderung des Streuringsektors nachgeregelt wird, so dass der hiermit korrespondierende Abwurfparameter um weniger als der Maximalwert von dessen Sollwert abweicht,

**dadurch gekennzeichnet, dass** die in der Datenbank hinterlegten funktionalen Abhängigkeiten des wenigstens einen Einstellparameters von dem Abwurfparameter den Typ der jeweiligen Verteilerscheibe und/oder deren Wurfschaufeln berücksichtigen, wobei es sich bei dem Abwurfparameter um einen für die Umfangsverteilung des Streugutes repräsentativen Parameter handelt, welcher einen Winkelwert in einem Polarkoordinatensystems mit auf der Drehachse der Verteilerscheibe angeordnetem Zentrum umfasst, welcher die Umfangsverteilung des Streugutes zu repräsentieren vermag.

2. Verfahren nach Anspruch 1, **dadurch gekennzeichnet, dass** der die Umfangsverteilung des Streugutes repräsentierende Winkelwert

- denjenigen Winkel in dem Polarkoordinatensystem, an welchem die maximale Masse an Streugut von den Verteilerscheiben abgeworfen wird; oder
- denjenigen Winkel, welcher die Verteilungskurve der Masse an ausgebrachtem Streugut über den Umfang der Verteilerscheibe in Form eines bestimmten Quantils beschreibt,

bezeichnet.

3. Verfahren nach Anspruch 1 oder 2, **dadurch gekennzeichnet, dass** die in der Datenbank hinterlegten funktionalen Abhängigkeiten des wenigstens einen Einstellparameters der Einrichtung zur Veränderung des Streuringsektors von dem Abwurfparameter ferner

- die physikalischen Eigenschaften des jeweiligen Streugutes, insbesondere dessen Flugeigenschaften; und/oder
- den jeweiligen Massenstrom an mittels der Dosiereinrichtung auf die Verteilerscheibe aufgegebenem Streugut; und/oder
- die jeweilige Arbeitsbreite
berücksichtigen.

4. Verfahren nach einem der Ansprüche 1 bis 3, **dadurch gekennzeichnet, dass** Sollwerte des Abwurfparameters oder des hiermit korrespondierenden Einstellparameters für verschiedene Typen von Verteilerscheiben und/oder deren Wurfschaufeln sowie insbesondere ferner für

- die physikalischen Eigenschaften verschiedener Streugüter; und/oder
- verschiedene Massenströme an mittels der Dosiereinrichtung auf die Verteilerscheibe aufgegebenem Streugut; und/oder
- verschiedene Arbeitsbreiten
experimentell ermittelt und in die Regeleinheit eingegeben werden.

5. Verfahren nach einem der Ansprüche 1 bis 4, **dadurch gekennzeichnet, dass** die Einrichtung zur Veränderung des Streuringsektors aus der Gruppe

- Einrichtung zur Verstellung des Aufgabepunktes des Streugutes auf die Verteilerscheibe, bei deren Einstellparameter es sich um den Aufgabepunkt des Streugutes auf die Verteilerscheibe handelt;
- Einrichtung zur Veränderung der Drehzahl der Verteilerscheibe, bei deren Einstellparameter es sich um die Drehzahl der Verteilerscheibe handelt;
- Einrichtung zur Verstellung der Neigung der Verteilerscheibe, bei deren Einstellparameter es sich um den Neigungswinkel der Verteilerscheibe handelt; und
- Einrichtung zur Verstellung der Wurfschaufeln der Verteilerscheibe, bei deren Einstellparameter es sich um die Relativposition der Wurfschaufeln in Bezug auf die Verteilerscheibe handelt,

gewählt ist.

6.  Verfahren nach einem der Ansprüche 1 bis 5, **dadurch gekennzeichnet, dass** der Abwurfparameter aus wenigstens einem sensorisch erfassten Messwert aus der Gruppe

- Massenstrom des in einem jeweiligen Umfangsbereich von der Verteilerscheibe abgeworfenem Streugutes;
- Geschwindigkeit des in einem jeweiligen Umfangsbereich von der Verteilerscheibe abgeworfenen Streugutes; und
- Richtung des in einem jeweiligen Umfangsbereich von der Verteilerscheibe abgeworfenen Streugutes ermittelt wird.

7.  Verfahren nach einem der Ansprüche 1 bis 6, **dadurch gekennzeichnet, dass** in der Datenbank der Regeleinheit für jeden Typ einer jeweiligen Verteilerscheibe und/oder deren Wurfschaufeln

- separate funktionale Abhängigkeiten des wenigstens einen Einstellparameters von dem Abwurfparameter oder
- separate Faktoren, um die funktionalen Abhängigkeiten des wenigstens einen Streuparameters von dem Abwurfparameter an die jeweilige Verteilerscheibe und/oder deren Wurfschaufeln anzupassen,

insbesondere in Form von Kennlinien, Kennkurven oder Kennfeldern, hinterlegt werden.

8.  Verfahren nach einem der Ansprüche 1 bis 7, **dadurch gekennzeichnet, dass** der Typ der jeweiligen Verteilerscheibe und/oder deren Wurfschaufeln

- in eine Eingabeeinrichtung der Regeleinheit eingegeben wird; oder
- sensorisch oder mittels eines RFID-Transponders der jeweiligen Verteilerscheibe und/oder deren Wurfschaufeln erfasst wird.

9.  Verfahren nach einem der Ansprüche 1 bis 8, **dadurch gekennzeichnet, dass** der Istwert des Abwurfparameters mit Hilfe wenigstens eines berührungsfreien Sensors ermittelt wird, wobei der berührungsfreie Sensor insbesondere ein Messsignal mit einer vertikal nach oben gerichteten Richtungskomponente aussendet.

10. Verfahren nach einem der Ansprüche 1 bis 9, **dadurch gekennzeichnet, dass**

- wenigstens ein Sensor konzentrisch zur Drehachse der Verteilerscheibe, insbesondere um einen Winkel von wenigstens 100°, verschwenkt wird, wobei der Sensor insbesondere sowohl in der einen als auch in der anderen Schwenkrichtung den Abwurfparameter oder hierfür repräsentative Messwerte in unterschiedlichen Winkelpositionen liefert oder
- eine Mehrzahl an Sensoren konzentrisch, insbesondere um einen Winkel von wenigstens 100°, um den Umfang der Drehachse der Verteilerscheibe herum angeordnet wird, wobei jeder Sensor den Abwurfparameter oder hiefür repräsentative Messwerte für seine jeweilige Umfangsposition liefert.

11. Verfahren nach einem der Ansprüche 1 bis 10, **dadurch gekennzeichnet, dass**

- der Sensor in Abhängigkeit der jeweiligen Verteilerscheibe und/oder deren Wurfschaufeln in eine für die jeweilige Verteilerscheibe und/oder deren Wurfschaufeln vorgegebene Position im Wesentlichen radial in Bezug auf die Drehachse der Verteilerscheibe verstellt wird; und/oder
- eine Mehrzahl an in unterschiedlichen Radialpositionen in Bezug auf die Verteilerscheibe angeordneten Sensoren vorgesehen ist, welche in Abhängigkeit der jeweiligen Verteilerscheibe und/oder deren Wurfschaufeln aktiviert bzw. deaktiviert werden.

12. Verfahren nach einem der Ansprüche 1 bis 11, **dadurch gekennzeichnet, dass** die Verfahrensschritte (c) bis (e) im Wesentlichen kontinuierlich oder in periodischen Zeitabständen während der Streuarbeit durchgeführt werden.

13. Verfahren nach einem der Ansprüche 1 bis 12, **dadurch gekennzeichnet, dass** der Scheibenstreuer wenigstens zwei regelbare Dosiereinrichtungen, je eine unterhalb einer jeweiligen Dosiereinrichtung angeordnete, mit Wurfschaufeln versehene Verteilerscheibe sowie je eine, einer jeweiligen Verteilerscheibe zugeordnete Einrichtung zur Veränderung des Streuringsektors des Streugutes auf dem Boden umfasst, wobei

(c) der wenigstens eine Istwert des Abwurfparameters mit Hilfe je wenigstens eines, nahe dem Umfang einer jeden Verteilerscheibe angeordneten Sensors für jede Verteilerscheibe unabhängig voneinander ermittelt wird;
(d) in der Regeleinheit der mit Hilfe des jeweiligen Sensors ermittelte Istwert des Abwurfparameters mit dessen Sollwert verglichen wird; und
(e) im Falle einer Abweichung des Istwertes des Abwurfparameters von dem Sollwert um mehr als einen vorherbestimmten Maximalwert der Einstellparameter einer jeweiligen Einrichtung zur Veränderung des Streuringsektors unabhängig voneinander nachgeregelt wird, so dass der jeweilige, hiermit korrespondierende Abwurfparameter für jede Verteilerscheibe um weniger als der Maximalwert von dessen Sollwert abweicht.

14. Verfahren nach Anspruch 13, **dadurch gekennzeichnet, dass**

(b) der Regeleinheit ein für sämtliche Einrichtungen zur Veränderung des Streuringsektors gleicher Sollwert oder mehrere, für die jeweiligen Einrichtungen zur Veränderung des Streuringsektors verschiedene Sollwerte des Abwurfparameters und/oder des hiermit korrespondierenden Einstellparameters eingegeben wird/werden.

15. Verfahren nach einem der Ansprüche 1 bis 12, **dadurch gekennzeichnet, dass** der Scheibenstreuer wenigstens zwei regelbare Dosiereinrichtungen, je eine unterhalb einer jeweiligen Dosiereinrichtung angeordnete, mit Wurfschaufeln versehene Verteilerscheibe sowie je eine, einer jeweiligen Verteilerscheibe zugeordnete Einrichtung zur Veränderung des Streuringsektors des Streugutes auf dem Boden umfasst, wobei

(c) der wenigstens eine Istwert des Abwurfparameters mit Hilfe wenigstens eines, nahe dem Umfang nur einer Verteilerscheibe angeordneten Sensors für diese Verteilerscheibe ermittelt wird;
(d) in der Regeleinheit der mit Hilfe des dieser Verteilerscheibe zugeordneten Sensors ermittelte Istwert des Abwurfparameters mit dessen Sollwert verglichen wird; und
(e) im Falle einer Abweichung des Istwertes des Abwurfparameters von dem Sollwert um mehr als einen vorherbestimmten Maximalwert der Einstellparameter sämtlicher Einrichtungen zur Veränderung des Streuringsektors in einander entsprechender Weise nachgeregelt wird, so dass der hiermit korrespondierende Abwurfparameter der mit dem Sensor versehenen Verteilerscheibe um weniger als der Maximalwert von dessen Sollwert abweicht.

16. Scheibenstreuer, welcher zur Durchführung eines Verfahrens gemäß dem Oberbegriff des Anspruchs 1 ausgebildet ist, mit wenigstens einer regelbaren Dosiereinrichtung, mit wenigstens einer unterhalb der Dosiereinrichtung angeordneten, mit Wurfschaufeln versehenen Verteilerscheibe sowie mit wenigstens einer Einrichtung zur Veränderung des Streuringsektors des Streugutes auf dem Boden, wobei zumindest die Einrichtung zur Veränderung des Streuringsektors mit einer Regeleinheit in Wirkverbindung steht, um wenigstens einen Einstellparameter der Einrichtung zur Veränderung des Streuringsektors in Abhängigkeit wenigstens eines, mit Hilfe wenigstens eines Sensors ermittelten Abwurfparameters zu regeln, wobei

(a) in einer Datenbank der der Einrichtung zur Verstellung des Streuringsektors zugeordneten Regeleinheit funktionale Abhängigkeiten des wenigstens einen Einstellparameters der Einrichtung zur Veränderung des Streuringsektors von dem wenigstens einem Abwurfparameter hinterlegt sind;
(b) die Regeleinheit eine Eingabeeinrichtung aufweist, welche eine Eingabe eines gewünschten Sollwertes des Abwurfparameters und/oder des hiermit korrespondierenden Einstellparameters ermöglicht;
(c) der wenigstens eine Sensor nahe dem Umfang der Verteilerscheibe angeordnet ist und wenigstens einen, für den Istwert des Abwurfparameters repräsentativen Messwert liefert;
(d) in der Regeleinheit eine Auswerteelektronik gespeichert ist, welche den mit Hilfe des Sensors ermittelten Istwert des Abwurfparameters mit dessen Sollwert vergleicht, und
(e) im Falle einer Abweichung des Istwertes des Abwurfparameters von dem Sollwert um mehr als einen vorherbestimmten Maximalwert den Einstellparameter der Einrichtung zur Veränderung des Streuringsektors nachregelt, so dass der hiermit korrespondierende Abwurfparameter um weniger als der Maximalwert von dessen Sollwert abweicht,

**dadurch gekennzeichnet, dass** die in der Datenbank hinterlegten funktionalen Abhängigkeiten des wenigstens einen Einstellparameters von dem Abwurfparameter den Typ der jeweiligen Verteilerscheibe und/oder deren Wurfschaufeln berücksichtigen, wobei es sich bei dem Abwurfparameter um einen für die Umfangsverteilung des Streugutes repräsentativen Parameter handelt, welcher einen Winkelwert in einem Polarkoordinatensystems mit auf der Drehachse der Verteilerscheibe angeordnetem Zentrum umfasst, welcher die Umfangsverteilung des Streugutes zu repräsentieren vermag.

17. Scheibenstreuer nach Anspruch 16, **dadurch gekennzeichnet, dass** seine Regeleinheit ferner zur Durchführung eines Verfahrens gemäß wenigstens einem der Ansprüche 2 bis 15 ausgebildet ist.

## Claims

1. Method for adjusting at least one device for changing the spreading ring sector of a disc spreader which comprises at least one adjustable metering device, at least one distributor disc which is arranged underneath the metering device and is provided with thrower blades, and the at least one device for changing the spreading ring sector of the granular material on the ground, wherein

    (a) functional dependences of at least one setting parameter of the device for changing the spreading ring sector on a throwing parameter are stored in a database of a control unit which is assigned to the device for adjusting the spreading ring sector;
    (b) a setpoint value of the throwing parameter and/or of the setting parameter corresponding thereto are/is input in the control unit;
    (c) at least one actual value of the throwing parameter is determined using at least one sensor which is arranged near to the circumference of the distributor disc;
    (d) the actual value, which is determined using the sensor, of the throwing parameter is compared with the setpoint value thereof in the control unit; and
    (e) in the case of a deviation of the actual value of the throwing parameter from the setpoint value by more than a predetermined maximum value the setting parameter of the device for changing the spreading ring sector is re-adjusted, with the result that the throwing parameter which corresponds thereto deviates from the setpoint value thereof by less than the maximum value,

    **characterized in that** the functional dependencies, stored in the database, of the at least one setting parameter on the throwing parameter take into account the type of the respective distributor disc and/or the thrower blades thereof, wherein the throwing parameter is a parameter which is representative of the circumferential distribution of the granular material, which parameter comprises an angle value in a polar coordinate system with a centre which is arranged on the rotational axis of the distributor disc and which is capable of representing the circumferential distribution of the granular material.

2. Method according to Claim 1, **characterized in that** the angle value which represents the circumferential distribution of the granular material denotes

    - that angle in the polar coordinate system at which the maximum mass of granular material is ejected by the distributor discs; or
    - that angle which describes the distribution curve of the mass of discharged granular material over the circumference of the distributor disc in the form of a specific quantile.

3. Method according to Claim 1 or 2, **characterized in that** the functional dependencies, stored in the database, of the at least one setting parameter of the device for changing the spreading ring sector on the throwing parameter also take into account

    - the physical properties of the respective granular material, in particular the flight properties thereof; and/or
    - the respective mass flow of granular material which is placed on the distributor disc by means of the metering device; and/or
    - the respective working width.

4. Method according to one of Claims 1 to 3, **characterized in that** setpoint values of the throwing parameter or of the setting parameter, corresponding thereto, for various types of distributor discs and/or the thrower blades thereof and also in particular furthermore for

    - the physical properties of various granular materials; and/or
    - various mass flows of granular material which is placed on the distributor disc by means of the metering device; and/or
    - various working widths
    are determined experimentally and input in the control unit.

5. Method according to one of Claims 1 to 4, **characterized in that** the device for changing the spreading ring sector is selected from the group comprising

    - a device for adjusting the point at which the granular material is placed on the distributor disc, the setting parameter of which is the point at which the granular material is placed on the distributor disc;
- a device for changing the rotational speed of the distributor disc, the setting parameter of which is the rotational speed of the distributor disc;
- a device for adjusting the inclination of the distributor disc, the setting parameter of which is the angle of inclination of the distributor disc; and
- a device for adjusting the thrower blades of the distributor disc, the setting parameter of which is the relative position of the thrower blades with respect to the distributor disc.

6. Method according to one of Claims 1 to 5, **characterized in that** the throwing parameter is determined from at least one measured value, acquired by sensor, from the group

- the mass flow of the granular material which is thrown by the distributor disc in a respective circumferential area;
- the speed of the granular material which is thrown by the distributor disc in a respective circumferential area; and
- the direction of the granular material which is thrown by the distributor disc in a respective circumferential area.

7. Method according to one of Claims 1 to 6, **characterized in that** the following are stored in the database of the control unit for each type of a respective distributor disc and/or the thrower blades thereof:

- separate functional dependencies of the at least one setting parameter on the throwing parameter, or
- separate factors for adapting the functional dependencies of the at least one spreading parameter on the throwing parameter to the respective distributor disc and/or the thrower blades thereof,

in particular in the form of characteristic lines, characteristic curves or characteristic diagrams.

8. Method according to one of Claims 1 to 7, **characterized in that** the type of the respective distributor disc and/or the thrower blades thereof

- is input in an input device of the control unit; or
- is detected by sensor or by means of an RFID transponder of the respective distributor disc and/or the thrower blades thereof.

9. Method according to one of Claims 1 to 8, **characterized in that** the actual value of the throwing parameter is determined using at least one contact-free sensor, wherein the contact-free sensor in particular emits a measuring signal with a directional component which is directed vertically upwards.

10. Method according to one of Claims 1 to 9, **characterized in that**

- at least one sensor is pivoted concentrically with respect to the rotational axis of the distributor disc, in particular by an angle of at least 100°, wherein the sensor supplies, in particular both in the one and in the other pivoting direction, the throwing parameter or measured values which are representative thereof at different angular positions or
- a multiplicity of sensors is arranged concentrically, in particular through an angle of at least 100°, around the circumference of the rotational axis of the distributor disc, wherein each sensor supplies the throwing parameter or measured values representative thereof for its respective circumferential position.

11. Method according to one of Claims 1 to 10, **characterized in that**

- the sensor is adjusted as a function of the respective distributor disc and/or the thrower blades thereof in a predefined position for the respective distributor disc and/or the thrower blades thereof essentially radially with respect to the rotational axis of the distributor disc; and/or
- a multiplicity of sensors which are arranged in different radial positions with respect to the distributor disc is provided, which sensors are activated or deactivated as a function of the respective distributor disc and/or the thrower blades thereof.

12. Method according to one of Claims 1 to 11, **characterized in that** the method steps (c) to (e) are carried out essentially continuously or at periodic time intervals during the spreading work.

13. Method according to one of Claims 1 to 12, **characterized in that** the disc spreader comprises at least two adjustable metering devices, in each case a distributor disc which is arranged underneath a respective metering device and is provided with thrower blades, and in each case a device, assigned to a respective distributor disc, for changing the spreading ring sector of the granular material on the ground, wherein

(c) the at least one actual value of the throwing parameter is determined using in each case at least one sensor, arranged near to the circumference of each distributor disc, for each distributor disc independently of one another;

(d) the actual value of the throwing parameter which is determined using the respective sensor is compared with the setpoint value thereof in the control unit; and

(e) in the case of a deviation of the actual value of the throwing parameter from the setpoint value by more than a predetermined maximum value the setting parameter of a respective device for changing the spreading ring sector is re-adjusted independently of one another, with the result that the respective throwing parameter which corresponds thereto for each distributor disc deviates from the setpoint value thereof by less than the maximum value.

14. Method according to Claim 13, **characterized in that**

(b) a setpoint value, which is the same for all the devices for changing the spreading ring sector, or a plurality of setpoint values, different for the respective devices for changing the spreading ring sector, of the throwing parameter and/or of the setting parameter corresponding thereto is/are input in the control unit.

15. Method according to one of Claims 1 to 12, **characterized in that** the disc spreader comprises at least two adjustable metering devices, in each case a distributor disc which is arranged underneath a respective metering device and is provided with thrower blades, and in each case a device, assigned to a respective distributor disc, for changing the spreading ring sector of the granular material on the ground, wherein

(c) the at least one actual value of the throwing parameter is determined using at least one sensor, arranged near to the circumference of only one distributor disc, for this distributor disc;

(d) the actual value of the throwing parameter which is determined using the sensor which is assigned to this distributor disc is compared with the setpoint value thereof in the control unit; and

(e) in the case of a deviation of the actual value of the throwing parameter from the setpoint value by more than a predetermined maximum value the setting parameter of all the devices for changing the spreading ring sector is re-adjusted in a way which corresponds to one another, with the result that the throwing parameter, corresponding thereto, of the distributor disc provided with the sensor deviates from the setpoint value thereof by less than the maximum value.

16. Disc spreader, which is designed for carrying out a method according to the preamble of Claim 1, having at least one adjustable metering device, having at least one distributor disc which is arranged underneath the metering device and is provided with thrower blades, and having at least one device for changing the spreading ring sector of the granular material on the ground, wherein at least the device for changing the spreading ring sector is operatively connected to a control unit in order to adjust at least one setting parameter of the device for changing the spreading ring sector as a function of at least one throwing parameter which is determined using at least one sensor, wherein

(a) functional dependencies of the at least one setting parameter of the device for changing the spreading ring sector on the at least one throwing parameter are stored in a database of the control unit which is assigned to the device for adjusting the spreading ring sector;

(b) the control unit has an input device which permits inputting of a desired setpoint value of the throwing parameter and/or of the setting parameter corresponding thereto;

(c) the at least one sensor is arranged near to the circumference of the distributor disc and supplies at least one measured value which is representative of the actual value of the throwing parameter;

(d) evaluation electronics, which compare the actual value of the throwing parameter, determined using the sensor, with the setpoint value thereof, are stored in the control unit, and

(e) in the case of a deviation of the actual value of the throwing parameter from the setpoint value by more than a predetermined maximum value said evaluation electronics readjust the setting parameter of the device for changing the spreading ring sector, with the result that the throwing parameter corresponding thereto deviates from the setpoint value thereof by less than the maximum value,

**characterized in that** the functional dependencies, stored in the database, of the at least one setting parameter on the throwing parameter take into account the type of the respective distributor disc and/or the thrower blades thereof, wherein the throwing parameter is a parameter which is representative of the circumferential distribution of the granular material, which parameter comprises an angle value in a polar coordinate system with a centre which is arranged on the rotational axis of the distributor disc and which is capable of representing the circumferential distribution of the granular material.

17. Disc spreader according to Claim 16, **characterized in that** its control unit is furthermore designed for carrying out a method according to at least one of Claims 2 to 15.

**Revendications**

1. Procédé de régulation d'au moins un dispositif permettant de modifier le secteur d'anneau d'épandage d'un épandeur à disque, ledit épandeur comprenant au moins un dispositif de dosage réglable, au moins un disque épandeur disposé en dessous du dispositif de dosage, pourvu de pales d'éjection, ainsi que d'au moins un dispositif permettant de modifier le secteur d'anneau d'épandage du produit à épandre sur le sol :

   (a) des dépendances fonctionnelles d'au moins un paramètre de réglage du dispositif permettant de modifier le secteur d'anneau d'épandage d'un paramètre d'éjection sont mémorisées dans une base de données d'une unité de régulation associée au dispositif de réglage du secteur d'anneau d'épandage ;
   (b) une valeur théorique du paramètre d'éjection et/ou du paramètre de réglage correspondant est entrée dans l'unité de régulation ;
   (c) au moins une valeur réelle du paramètre d'éjection est calculée à l'aide d'au moins un capteur disposé à proximité de la périphérie du disque épandeur ;
   (d) la valeur réelle du paramètre d'éjection calculée à l'aide du capteur est comparée à sa valeur théorique dans l'unité de régulation ; et
   (e) en cas d'écart de la valeur réelle du paramètre d'éjection par rapport à la valeur théorique de plus d'une valeur prédéfinie maximale, le paramètre de réglage du dispositif est réglé de nouveau pour modifier le secteur d'anneau d'épandage, de sorte que le paramètre d'éjection correspondant s'écarte d'une valeur inférieure à la valeur maximale par rapport à la valeur théorique ;

   **caractérisé en ce que** les dépendances fonctionnelles mémorisées dans la base de données de l'au moins un paramètre de réglage du paramètre d'éjection prennent en compte le type du disque épandeur respectif et/ou de ses pales d'éjection, le paramètre d'éjection étant un paramètre représentatif de la répartition en périphérie du produit à épandre, comprenant une valeur angulaire dans un système de coordonnées polaires avec le centre disposé sur l'axe de rotation du disque épandeur représentant la répartition en périphérie du produit à épandre.

2. Procédé selon la revendication 1, **caractérisé en ce que** la valeur angulaire représentant la répartition en périphérie du produit à épandre désigne :

   - l'angle dans le système de coordonnées polaires selon lequel la masse maximale de produit à épandre est éjectée des disques épandeurs ; ou
   - l'angle décrivant la courbe de répartition de la masse de produit à épandre sorti sur la périphérie du disque épandeur sous la forme d'un quantile déterminé.

3. Procédé selon la revendication 1 ou 2, **caractérisé en ce que** les dépendances fonctionnelles mémorisées dans la base de données de l'au moins un paramètre de réglage du dispositif permettant de modifier le secteur d'anneau d'épandage du paramètre d'éjection prennent en outre en compte :

   - les propriétés physiques du produit respectif à épandre, notamment ses caractéristiques de vol ; et/ou
   - le débit massique respectif du produit à épandre de façon planifiée sur le disque épandeur à l'aide du dispositif de dosage ; et/ou
   - la largeur de travail respective.

4. Procédé selon l'une quelconque des revendications 1 à 3, **caractérisé en ce que** les valeurs théoriques du paramètre d'éjection ou du paramètre de réglage correspondant sont saisies pour différents types de disques épandeurs et/ou de ses pales d'éjection ainsi que notamment en outre pour :

   - les propriétés physiques des différents produits à épandre ; et/ou
   - les différents débits massiques de produit à épandre de façon planifiée sur le disque épandeur à l'aide du dispositif de dosage ; et/ou
   - les différentes largeurs de travail déterminées de façon expérimentale et saisies dans l'unité de régulation.

5. Procédé selon l'une quelconque des revendications 1 à 4, **caractérisé en ce que** le dispositif permettant de modifier le secteur d'anneau d'épandage est sélectionné dans le groupe :

   - dispositif de réglage du point cible du produit à épandre sur le disque épandeur lorsque le paramètre de réglage est le point cible du produit à épandre sur le disque épandeur;
   - dispositif permettant de modifier la vitesse de rotation du disque épandeur lorsque le paramètre de réglage est la vitesse de rotation du disque épandeur ;
   - dispositif de réglage du dispositif d'inclinaison du disque épandeur lorsque le paramètre de réglage est l'angle du dispositif d'inclinaison du disque épandeur ; et
   - dispositif de réglage des pales d'éjection du disque épandeur lorsque le paramètre de réglage est la position relative des pales d'éjection par rapport au disque épandeur.

6. Procédé selon l'une quelconque des revendications 1 à 5, **caractérisé en ce que** le paramètre d'éjection est calculé à partir d'au moins une valeur de mesure, déterminée par voie de capteurs, appartenant au groupe :

   - débit massique du produit à épandre éjecté dans une zone de périphérie respective du disque épandeur ;
   - vitesse du produit à épandre éjecté dans une zone de périphérie respective du disque épandeur ; et
   - direction du produit à épandre éjecté dans une zone de périphérie respective du disque épandeur.

7. Procédé selon l'une quelconque des revendications 1 à 6, **caractérisé en ce que** l'on mémorise dans la base de données de l'unité de régulation pour chaque type d'un disque épandeur respectif et/ou de ses pales d'éjection :

   - les dépendances fonctionnelles séparées de l'au moins un paramètre de réglage du paramètre d'éjection ; ou
   - des facteurs séparés pour adapter les dépendances fonctionnelles de l'au moins un paramètre d'épandage du paramètre d'éjection au disque épandeur respectif ou de ses pales d'éjection, notamment sous la forme de courbes caractéristiques, lignes caractéristiques ou caractéristiques.

8. Procédé selon l'une quelconque des revendications 1 à 7, **caractérisé en ce que** le type du disque épandeur respectif et/ou de ses pales d'éjection :

   - est entré dans un dispositif de saisie de l'unité de régulation ; ou
   - est déterminé par voie de capteurs ou à l'aide d'un transpondeur RFID du disque épandeur respectif et/ou de ses pales d'éjection.

9. Procédé selon l'une quelconque des revendications 1 à 8, **caractérisé en ce que** la valeur réelle du paramètre d'éjection est calculée à l'aide d'au moins un capteur sans contact, le capteur sans contact envoyant notamment un signal de mesure avec une composante de direction orientée verticalement vers le haut.

10. Procédé selon l'une quelconque des revendications 1 à 9, **caractérisé en ce que** :

   - au moins un capteur est pivoté concentriquement par rapport à l'axe de rotation du disque épandeur, notamment avec un angle d'au moins 100°, le capteur amenant notamment tant dans la première direction de pivotement que dans l'autre direction le paramètre d'éjection ou les valeurs de mesure représentatives correspondantes dans différentes positions angulaires ; ou
   - une pluralité de capteurs, disposés concentriquement, notamment selon un angle d'au moins 100°, autour de la périphérie de l'axe de rotation du disque épandeur, chaque capteur fournissant le paramètre d'éjection ou les valeurs de mesure représentatives correspondantes pour sa position périphérique respective.

11. Procédé selon l'une quelconque des revendications 1 à 10, **caractérisé en ce que** :

   - le capteur peut être réglé en fonction du disque épandeur respectif et/ou de ses pales d'éjection dans une position prédéterminée pour le disque épandeur respectif et/ou ses pales d'éjection, pour l'essentiel dans le plan radial par rapport à l'axe de rotation du disque épandeur ; et/ou
   - une pluralité de capteurs disposés dans différentes positions radiales par rapport au disque épandeur est prévue, celle-ci et/ou ceux-ci étant activés en fonction du disque épandeur respectif et/ou de ses pales d'éjection.

12. Procédé selon l'une quelconque des revendications 1 à 11, **caractérisé en ce que** les étapes de procédé (c) à (e) sont réalisées pour l'essentiel en continu ou à des intervalles périodiques pendant le travail d'épandage.

13. Procédé selon l'une quelconque des revendications 1 à 12, **caractérisé en ce que** l'épandeur à disque comprend au moins deux dispositifs de dosage réglables, respectivement un disque épandeur disposé sous un dispositif de dosage respectif, pourvu de pales d'éjection ainsi que respectivement un dispositif associé à un disque épandeur respectif permettant de modifier le secteur d'anneau d'épandage du produit à épandre sur le sol ; sachant que :

   (c) l'au moins une valeur réelle du paramètre d'éjection est calculée à l'aide de respectivement au moins un capteur disposé à proximité de la périphérie de chaque disque épandeur pour chaque disque épandeur indépendamment l'un de l'autre ;
   (d) dans l'unité de régulation, la valeur réelle, calculée à l'aide du capteur respectif, du paramètre d'éjection est comparée à sa valeur théorique ; et

(e) en cas d'écart de la valeur réelle du paramètre d'éjection par rapport à la valeur théorique de plus d'une valeur prédéfinie maximale, le paramètre de réglage d'un dispositif respectif permettant de modifier le secteur d'anneau d'épandage de façon indépendante est réglé de nouveau, de sorte que le paramètre d'éjection correspondant respectif s'écarte, pour chaque disque épandeur, d'une valeur inférieure à la valeur maximale par rapport à la valeur théorique.

14. Procédé selon la revendication 13, **caractérisé en ce que** :

(b) une ou plusieurs valeurs théoriques identiques pour l'ensemble des dispositifs permettant de modifier le secteur d'anneau d'épandage est et/ou sont envoyées à l'unité de régulation, pour les dispositifs servant à modifier le secteur d'anneau d'épandage respectif des différentes valeurs théoriques du paramètre d'éjection et/ou du paramètre de réglage correspondant.

15. Procédé selon l'une quelconque des revendications 1 à 12, **caractérisé en ce que** l'épandeur à disque comprend au moins deux dispositifs de dosage réglables, respectivement un disque épandeur disposé en dessous d'un dispositif de dosage respectif, pourvu de pales d'éjection ainsi que respectivement un dispositif associé à un disque épandeur respectif et permettant de modifier le secteur d'anneau d'épandage du produit à épandre sur le sol ; sachant que :

(c) l'au moins une valeur réelle du paramètre d'éjection est calculée à l'aide d'au moins un capteur disposé à proximité de la périphérie de seulement un disque épandeur pour ce disque épandeur ;
(d) dans l'unité de régulation, la valeur réelle du paramètre d'éjection calculée à l'aide du capteur associé à ce disque épandeur est comparée à sa valeur théorique ; et
(e) en cas d'écart de la valeur réelle du paramètre d'éjection par rapport à la valeur théorique de plus d'une valeur maximale prédéfinie, le paramètre de réglage de l'ensemble des dispositifs permettant de modifier le secteur d'anneau d'épandage est réglé de nouveau de façon correspondante, de sorte que le paramètre d'éjection correspondant s'écarte d'une valeur inférieure à la valeur maximale par rapport à la valeur théorique au moyen du disque épandeur pourvu du capteur.

16. Épandeur à disque réalisé pour la mise en oeuvre d'un procédé selon le préambule de la revendication 1, avec au moins un dispositif de dosage réglable, avec au moins un disque épandeur disposé en dessous du dispositif de dosage, pourvu de pales d'éjection ainsi qu'avec au moins un dispositif permettant de modifier le secteur d'anneau d'épandage du produit à épandre sur le sol, au moins le dispositif permettant de modifier le secteur d'anneau d'épandage placé en liaison active avec une unité de régulation pour régler au moins un paramètre de réglage du dispositif permettant de modifier le secteur d'anneau d'épandage en fonction d'au moins un paramètre d'éjection calculé à l'aide d'au moins un capteur, sachant que :

(a) dans une base de données de l'unité de régulation associée au dispositif de réglage du secteur d'anneau d'épandage, les dépendances fonctionnelles de l'au moins un paramètre de réglage du dispositif permettant de modifier le secteur d'anneau d'épandage sont mémorisées par l'au moins un paramètre d'éjection ;
(b) l'unité de régulation comporte un dispositif de saisie permettant une saisie d'une valeur théorique souhaitée du paramètre d'éjection et/ou du paramètre de réglage correspondant ;
(c) l'au moins un capteur est disposé à proximité de la périphérie du disque épandeur et fournit au moins une valeur de mesure représentative de la valeur réelle du paramètre d'éjection ;
(d) un système électronique d'analyse est mémorisé dans l'unité de régulation, ledit système comparant la valeur réelle du paramètre d'éjection calculée à l'aide du capteur à sa valeur théorique ; et
(e) en cas d'écart de la valeur réelle du paramètre d'éjection par rapport à la valeur théorique de plus d'une valeur prédéfinie maximale, le paramètre de réglage du dispositif permettant de modifier le secteur d'anneau d'épandage est de nouveau réglé, de sorte que le paramètre d'éjection correspondant s'écarte d'une valeur inférieure à la valeur maximale par rapport à la valeur théorique ;

**caractérisé en ce que** les dépendances fonctionnelles mémorisées dans la base de données de l'au moins un paramètre de réglage du paramètre d'éjection prennent en compte le type du disque épandeur respectif et/ou de ses pales d'éjection, le paramètre d'éjection étant un paramètre représentatif de la répartition en périphérie du produit à épandre comprenant une valeur angulaire dans un système de coordonnées polaires avec le centre disposé sur l'axe de rotation du disque épandeur représentant la répartition en périphérie du produit à épandre.

17. Épandeur à disque selon la revendication 16, **caractérisé en ce que** son unité de régulation est en outre réalisée pour mettre en oeuvre un procédé selon au moins l'une quelconque des revendications 2 à 15.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0682857 A1
- DE 1457863 A1
- EP 0303325 A1
- EP 0287165 A1
- EP 0300580 A1
- DE 19500824 A1
- DE 19723359 A1
- DE 102013002751
- DE 102005015236 A1